(19) Europäisches Patentamt
European Patent Office
Office européen des brevets

(11) Veröffentlichungsnummer : **0 416 259 B1**

(12) **EUROPÄISCHE PATENTSCHRIFT**

(45) Veröffentlichungstag der Patentschrift : **23.03.94 Patentblatt 94/12**

(51) Int. Cl.$^5$ : **C08K 5/5313,** C08K 13/02, C08L 77/00

(21) Anmeldenummer : **90114017.8**

(22) Anmeldetag : **21.07.90**

(54) **Flammgeschützte, nicht tropfende Polyamidformmassen.**

(30) Priorität : **04.08.89 DE 3925792**

(43) Veröffentlichungstag der Anmeldung : **13.03.91 Patentblatt 91/11**

(45) Bekanntmachung des Hinweises auf die Patenterteilung : **23.03.94 Patentblatt 94/12**

(84) Benannte Vertragsstaaten : **DE FR GB IT**

(56) Entgegenhaltungen :
**EP-A- 183 195**
**EP-A- 0 095 100**
**EP-A- 0 122 699**
**EP-A- 0 139 893**
**EP-A- 0 332 965**

(73) Patentinhaber : **BAYER AG**
**D-51368 Leverkusen (DE)**

(72) Erfinder : **Fuhr, Karl, Dr.**
**Krüllsdyk 55**
**D-4150 Krefeld (DE)**
Erfinder : **Müller, Friedemann, Dr.**
**Am Steinacker 5**
**D.4040 Neuss (DE)**
Erfinder : **Ott, Karl-Heinz, Dr.**
**Paul-Klee-Strasse 54**
**D-5090 Leverkusen 1 (DE)**
Erfinder : **El-Sayed, Aziz, Dr.**
**Saarlauterner Strasse 39**
**D-5090 Leverkusen 1 (DE)**
Erfinder : **Müller, Peter-Rolf, Dr.**
**Paul-Klee-Strasse 76**
**D-5090 Leverkusen 1 (DE)**
Erfinder : **Wandel, Martin, Dr.**
**Donatusstrasse 17**
**D-4047 Dormagen (DE)**

EP 0 416 259 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Gegenstand der Erfindung sind flammgeschützte, nicht tropfende Polyamidformmassen, die in bestimmten Mengen

A) Phosphinsäureester von Polyphenolen auf Basis Phenol-Aldehyd/Keton-Kondensaten,

B) Antidripping-Mittel (wie Polyfluorethylenpolymerisate oder Aramide) und

C) Zinkborat

sowie gegebenenfalls Verstärkungsmittel und weitere Additive für Flammschutz sowie für Verarbeitung etc. enthalten.

Ester von Phosphinsäuren und Alkoholen bzw. Phenolen sind bekannt. Auch wurden sie bereits als Flammschutzmittel vorgeschlagen. In der DE-OS 3 219 047 werden Phosphinsäureester von zweiwertigen Alkoholen oder ein- bzw. mehrwertigen Phenolen als Flammschutzmittel für Formmassen aus Polyphenylenoxid und schlagzäh modifiziertem Polymerisat einer monovinylaromatischen Verbindung beansprucht. Als mehrwertige Phenole werden speziell Resorcin, Brenzcatechin und Phloroglucin angegeben. Phosphinsäureester von Phenol-Aldehyd/Keton-Kondensaten werden nicht erwähnt. Auch ist die Verwendung von Phosphinsäureestern der beanspruchten Art als Flammschutzmittel für Polyamid im Zusammenwirken mit Antidripping-Mitteln (wie Polyfluorethylenpolymerisaten oder Aramid) und Zinkborat nicht vorbeschrieben.

Gegenstand der Erfindung sind flammgeschützte, nicht tropfende Polyamidformmassen, die in 100 Gew.-Teilen dieser Polyamidformmassen folgende Zusätze enthalten:

A) 3 bis 20 Gew.-%, vorzugsweise 5 bis 15 Gew.-%, Phosphinsäureester von Polyphenolen der Formel (I)

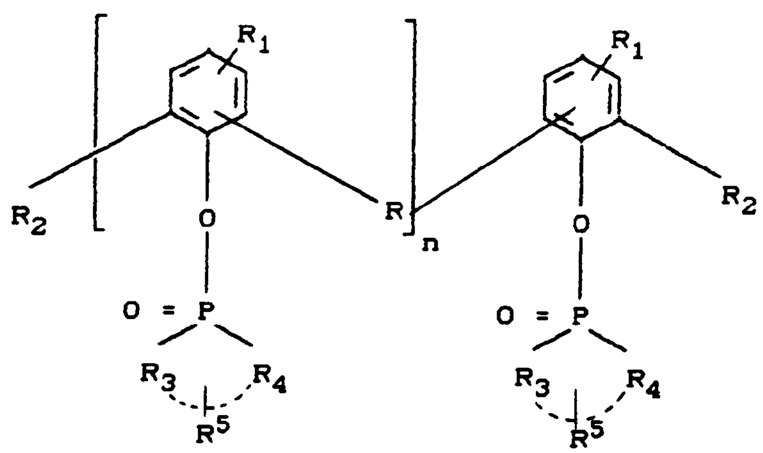

(I),

worin

n eine ganze Zahl zwischen 1 und 20, bevorzugt zwischen 1 und 10,

R eine Alkylengruppe mit 1 bis 4 Kohlenstoffatomen, eine Cycloalkylengruppe mit 5 bis 9 Kohlenstoffatomen oder, wenn n = 1 ist, auch eine direkte Bindung, eine Sulfonyl- oder Carbonylgruppe bzw. Sauerstoff oder Schwefel,

$R_1$ und $R_2$ Wasserstoff, Halogen, Alkylgruppen mit 1 bis 12 Kohlenstoffatomen, Cycloalkyl- mit 5 bis 9 Kohlenstoffatomen, Arylgruppen mit 6 bis 10 Kohlenstoffatomen,

$R_3$ und $R_4$ Alkylgruppen mit 1 bis 4 Kohlenstoffatomen und/oder Arylgruppen mit 6 bis 10 Kohlenstoffatomen sind, wobei $R_3$ und $R_4$ im Fall von Alkylgruppen auch durch eine Einfach- oder Doppelbindung verbunden sein können und der über das Phosphoratom gebildete Ring Alkylgruppen $R^5$ mit 1 bis 4 Kohlenstoffatomen tragen kann bedeutet,

und -R- vorzugsweise in die ortho- oder para-Stellungen der Phenolkerne gebunden ist, wobei dann $R_1$ in para- bzw. ortho-Stellungen gebunden ist.

B) Antidripping-Mittel in einer Gesamtmenge nicht über 6 Gew.-%, bevorzugt nicht über 3 Gew.-%, aus der Reihe von

B1) 0,1 bis 3 Gew.-%, vorzugsweise 0,3 bis 1,0 Gew.-% eines Polyfluorethylenpolymerisats und/oder

B2) 0,1 bis 5 Gew.-%, vorzugsweise 1 bis 2,5 Gew.-%, eines Aramids,

C) 0,5 bis 15 Gew.-%, vorzugsweise 3 bis 12 Gew.-%, Zinkborat (Hydrate) als Flammschutz-Verstärker sowie gegebenenfalls weitere Zusatzstoffe aus der Reihe

D) 0 bis 40 Gew.-%, vorzugsweise 15 bis 30 Gew.-% anorganische Füllstoffe und/oder Verstärkungsmittel

und/oder Pigmente,

E) 0 bis 30 Gew.-%, vorzugsweise 5 bis 20 Gew.-%, weitere Flammschutzmittel wie Stickstoff-, Halogen- und/oder andere Phosphorverbindungen,

F) 0 bis 10 Gew.-%, vorzugsweise 1 bis 5 Gew.-%, Verarbeitungshilfsmittel und

G) 0 bis 20 Gew.-% übliche Zusatzmittel für Polyamide wie UV-, Licht- und Thermostabilisatoren, bekannte Schlagzähigkeitsverbesserer und Verträglichkeitsverbesserer.

Die Zusatzmengen in der Polyamidmischung sollen in bevorzugter Ausführungsform dabei insgesamt 60 Gew.-%, vorzugsweise 53 Gew.-%, insbesondere 47 Gew.-%, nicht übersteigen; dabei sollen auch die Teilmengen beschränkt sein:

die Gesamtmengen an Flammschutzzusätzen (A + B + C + E) sollen 35 Gew.-%, vorzugsweise 30 Gew.-%, insbesondere 25,5 Gew.-%, nicht übersteigen;

die Gesamtmengen an Zusatzstoffen (F + G) sollen 25 Gew.-% nicht übersteigen;

und die Gesamtmengen an D) sollen 40 Gew.-% der Polyamid-Mischung nicht übersteigen.

Die erfindungsgemäß eingesetzten Phosphinsäureester (I) sind Alkyl- und Arylphosphinsäureester von Bisphenolen und Polyphenolen, wie sie durch Kondensationsprodukte von Phenolen mit Aldehyden oder Ketonen dargestellt werden. Bevorzugt werden dabei Alkyl- und Arylphosphinsäureester von Bisphenolen und höhermolekularen Phenol-Formaldehyd-Kondensationsprodukten (generell als Novolake bezeichnet) der Formel (II) und (III), wobei Formel (II) die Phosphinsäureester von Bisphenolen und Formel (III) die von Novolaken ($n \geqq 2$), vorzugsweise 3-8, darstellt

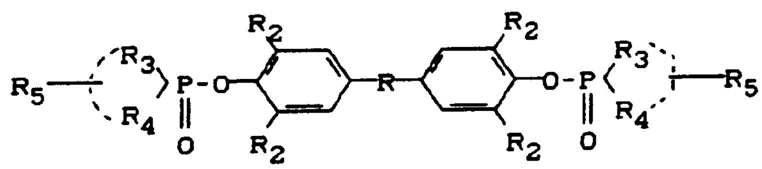

(II)

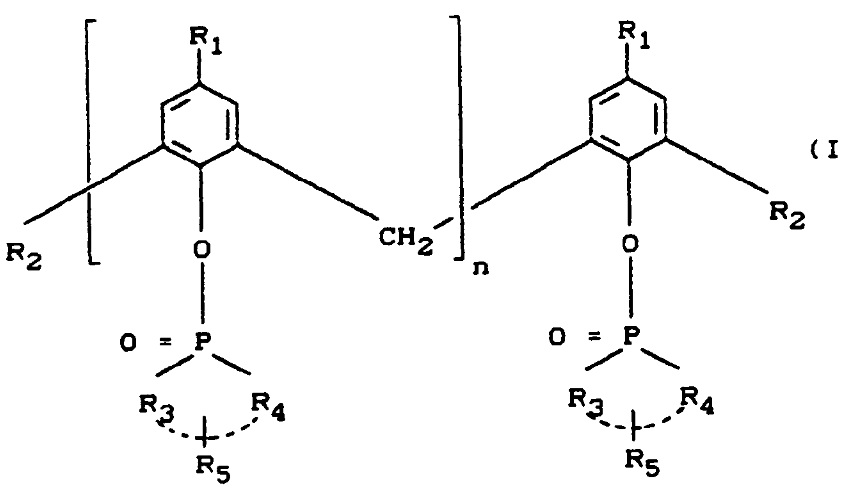

(III)

und wobei

| | |
|---|---|
| n | eine ganze Zahl zwischen 2 und 15, bevorzugt zwischen 2 und 10, |
| R | eine einfache Bindung, eine Methylen-, Isopropylidengruppe, Sauerstoff, Schwefel, eine Sulfonyl- oder Carbonylgruppe, |
| $R_1$ | Wasserstoff, Halogen oder eine Alkylgruppe mit 1 bis 12 Kohlenstoffatomen, |
| $R_2$ | Wasserstoff, Halogen oder eine Alkylgruppe mit 1 bis 4 Kohlenstoffatomen, |
| $R_3$ und $R_4$ | Methyl-, Ethyl-, Phenylgruppen oder gemeinsam die Butyliden- bzw. Alkylbutylidengruppe darstellen. |

Ganz besonders bevorzugt sind Verbindungen der Formel (IV) und (V)

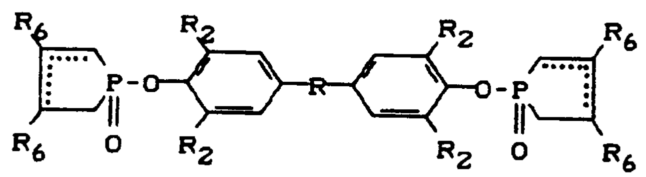

(IV)

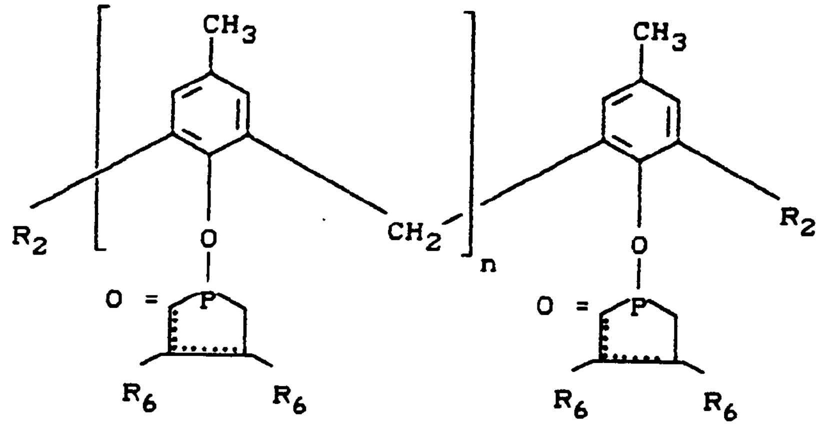

(V),

worin

n eine ganze Zahl zwischen 2 und 8 ist,
R die oben beschriebene Bedeutung hat,
$R_2$ Wasserstoff- oder Methylgruppen und
$R_6$ ebenfalls Wasserstoff oder Methylgruppen darstellen.

Polyamide im Sinne der Erfindung sind alle amorphen und/oder teilkristallinen, überwiegend aliphatische/cycloaliphatische, thermoplastische Polyamide, die nach dem bekannten Polykondensations- und/oder Polymerisationsprozeß aus überwiegend aliphatischen/cycloaliphatischen Diaminen und Dicarbonsäuren und/oder Lactamen ab 4 Methylengruppen im Lactamring hergestellt werden. Ausgangsmaterialien sind aliphatische oder gemischt aliphatische aromatische Dicarbonsäuren mit unter 50 Gew.-% aromatischen Bestandteilen, wie Adipinsäure, 2,2,4- und 2,4,4-Trimethyladipinsäure, Azelainsäure, Sebazinsäure, Decandicarbonsäure, Dodecandicarbonsäure, Cyclohexandicarbonsäure, Hexahydroterephthalsäure, Isophthalsäure und Terephthalsäure, sowie aliphatische und aromatische Diamine, wie Hexamethylendiamin, 2,2,4-und 2,4,4-Trimethylhexamethylendiamin, Diamino-dicyclohexylmethanisomere, Diamino-dicyclohexylpropanisomere und Isophorondiamin(isomere), Xylylendiamine, Aminocarbonsäuren wie ε-Aminocapronsäure und ω-Aminocarbonsäuren wie ω-Aminoundecansäure bzw. ω-Aminolaurinsäure.

Auch Copolyamide aus mehreren der genannten Monomeren können eingesetzt werden.

Bevorzugt sind Polyamid-6, Polyamid-6,6, Polyamid-6,10, Polyamid-6,12, Polyamid-11, Polyamid-12, Polyamid-6T6 oder 6I6 mit Aromatenanteilen unter 50 Gew.-%. Sie besitzen vorzugsweise eine relative Viskosität (gemessen an einer 1 gew.-%igen Lösung in m-Kresol bei 25°C von 2,0 bis 5,0, bevorzugt von 2,5 bis 4,0).

Die Polyamide lassen sich nach bekannten Verfahren herstellen (siehe Kunststoff-Handbuch, Band VI, Seiten 11 bis 198, Carl-Hanser-Verlag, München, 1966).

A) Phosphinsäureester

Die erfindungsgemäß eingesetzten Phosphinsäureester sind die Dialkyl-, Diaryl- und Alkylarylphosphinsäureester von Bis- und Polyphenolen (Novolaken). Da die Phosphinsäuren nicht direkt in die erfindungsgemäßen Ester umgewandelt werden können, sind ihre reaktiveren Derivate zu verwenden. Diese sind die Säurechloride, die durch Abspaltung von Chlorwasserstoff, und Phenylester (ebenfalls aus den Säurechloriden), die durch Abspaltung von Phenol (Umesterung) mit den Polyphenolen zu den erfindungsgemäßen Estern umgesetzt werden.

Beispiele für Phosphinsäuren sind Dimethylphosphinsäure, Methylethylphosphinsäure, Diethylphosphinsäure, Methylphenylphosphinsäure, Ethylphenylphosphinsäure, Diphenylphosphinsäure, Di-p-Tolylphosphinsäure und Phenylnaphthylphosphinsäure sowie 1-Hydroxy-1-oxo-phospholin, 1-Hydroxy-1-oxo-3-methylphospholin und 1-Hydroxy-1-oxo-3,4-dimethyl-phospholin.

Herstellungsverfahren für Phosphinsäuren und ihre Derivate wie Chloride und Phenylester sind bekannt

und in der Literatur zusammengestellt (Methoden der organischen Chemie (Houben-Weyl), Band XII/1, Seiten 217 bis 266, und Band E2, Seiten 123 bis 221).

Die Umsetzung der Phosphinsäurechloride mit Bis- und Polyphenolen erfolgt bei Temperaturen von 180 bis 200°C unter Abspaltung von Chlorwasserstoff recht langsam. Unter Mitverwendung von Katalysatoren wie Magnesiumchlorid gelingt dieses bereits bei niedrigeren Temperaturen und in kürzeren Zeiten. Bei niedrigeren Temperaturen müssen bei der Veresterung von Novolaken aus Gründen der Viskosität inerte, hochsiedende Lösungsmittel mitverwendet werden. Üblicherweise werden als Katalysatoren Magnesiumchlorid oder tertiäre Amine eingesetzt. Bei dem wesentlich schneller ablaufenden Umesterungsverfahren wird als Katalysator ebenfalls Magnesiumchlorid verwendet. Die Temperaturen liegen wieder bei 200°C.

Bisphenole und Novolake werden nach bekannten Verfahren hergestellt (siehe für Bisphenole: H. Schnell und H. Krimm, Angew. Chemie 75 (1963), 662 bis 668; für Novolake: Methoden der organischen Chemie (Houben-Weyl), Band XIV/2, Seiten 193 bis 292, und Ullmanns Encyclopädie der Technischen Chemie, 4. Auflage, Band 18, Seiten 245 bis 257).

Als geeignete Bisphenole seien erwähnt:
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfone
sowie deren kernalkylierte und kernhalogenierte Derivate.

Die wichtigsten Bisphenole im Sinne der Erfindung sind: 4,4'-Dihydroxydiphenyl, 2,2-Bis-(4-hydroxyphenyl)-propan, Bis-(4-hydroxyphenyl)-methan, 4,4'-Dihydroxybenzophenon, 4,4'-Dihydroxydiphenyl-ether, 4,4'-Dihydroxydiphenylsulfid, 4,4'-Dihydroxydiphenylsulfon sowie deren kernsubstituierte Derivate, wobei als Substituenten vorzugsweise $CH_3$, Cl oder Br in Frage kommen. Ein kernmethyliertes Derivat ist 2,2-Bis-(4-hydroxy-3,5-dimethylphenyl)-propan.

Besonders bevorzugte Diphenole sind 2,2-Bis-(4-hydroxyphenyl)-propan, 4,4'-Dihydroxydiphenyl, 4,4'-Dihydroxydiphenylether, 4,4'-Dihydroxydiphenylsulfon, 4,4'-Dihydroxybenzophenon und 2,2-Bis-(4-hydroxy-3,5-dimethylphenyl)-propan.

Es können auch Gemische von Diphenolen eingesetzt werden.

Geeignete Novolake sind Kondensationsprodukte aus Formaldehyd und Phenolen der allgemeinen Formel (VII),

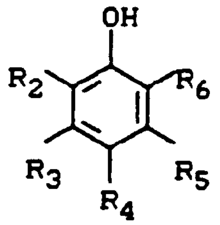

(VII),

worin
$R_2$ und $R_6$ Wasserstoffatome bezeichnen und $R_3$, $R_4$ und $R_5$ wahlweise gleich Wasserstoff, Halogen oder $C_1$-$C_{20}$-Alkyl-, Cycloalkyl-, $C_6$-$C_{10}$-Aryl-Gruppen sein können oder worin $R_2$ und $R_4$ Wasserstoffatome bezeichnen und $R_3$, $R_5$ und $R_6$ gleich den obengenannten Resten sein können.

Charakteristische Beispiele für Phenole sind, ohne damit eine Einschränkung zu treffen, Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-Stearyl-, p-Phenyl-, p-(2-Phenylethyl)-, o-Isopropyl-, p-Isopropyl-, m-Isopropylphenol sowie zahlreiche andere Phenole.

Bevorzugt eingesetzt werden Phenol, o-Kresol, m-Kresol, p-Kresol, p-t-Butylphenol und o-t-Butylphenol und p-Octylphenol.

Es können aber auch Gemische aus diesen Phenolen eingesetzt werden.

Bevorzugt eingesetzte Novolake sind demnach, ohne damit eine Einschränkung zu treffen:
Phenol/Formaldehyd-Novolak,
o-Kresol/Formaldehyd-Novolak,
m-Kresol/Formaldehyd-Novolak,
p-Kresol/Formaldehyd-Novolak,

t-Butylphenol/Formaldehyd-Novolak,
p-Octylphenol/Formaldehyd-Novolak.

Besonders bevorzugt wird der p-Kresol/Formaldehyd-Novolak.

B) Antidripping-Mittel

Die erfindungsgemäß geeigneten Polyfluorethylenpolymerisate B1) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere, Tetrafluorethylen-Difluorethylen-Copolymere oder Tetrafluorethylencopolymerisate mit geringen Mengen fluorfreier, copolymerisierbarer, ethylenisch ungesättigter Monomerer. Die Polymerisate sind bekannt. Sie können in feinteiliger Form, gewöhnlich als Pulver, verwendet werden. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drücken von 7 bis 71 kg/cm$^2$ und bei Temperaturen von 0 bis 200°C, vorzugsweise bei Temperaturen von 20 bis 100°C (nähere Einzelheiten siehe beispielsweise US-Patent 2 393 967).

Die erfindungsgemäß geeigneten Polyfluorethylenpolymerisate sollen vorzugsweise Gewichtsmittelmolekulargewicht zwischen $\overline{M}_w$ zwischen $10^5$ und $10^6$ haben.

Die Polyfluorethylenpolymerisate werden bevorzugt in nicht gesinterter Form zugesetzt.

Durch den Zusatz von Polyfluorethylenpolymerisaten wird insbesondere das Abtropfen der Formmassenschmelze während des Brandvorganges reduziert oder ganz verhindert.

Als Antidripping-Mittel geeignete aromatische Polyamide B2) sind üblicherweise aus aromatischen Arylendicarbonsäuren und aromatischen Diaminen durch Lösungskondensation oder durch Grenzflächenkondensation hergestellt (Kirk-Othmer, Ecyclopedia of Chemical Technology, Third Edition, Volume 3, Seiten 213 bis 242).

Arylendicarbonsäuren sind insbesondere Phthalsäure, Isophthalsäure und Terephthalsäure.

Aromatische Diamine sind beispielsweise: o-Phenylendiamin, m-Phenylendiamin, p-Phenylendiamin, Diaminodiphenyle, in denen die Phenylbausteine über Heteroatome oder Gruppen verknüpft sind, entsprechend der Formel

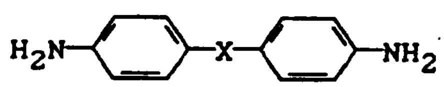 ,

X = -O-, -S-, $-SO_2-$, -CO-, $-CH_2-$.
$-C(CH_3)_2-$. $-CF_2-$.

Ferner sind als Antidripping-Mittel geeignet Polyimidamide wie:

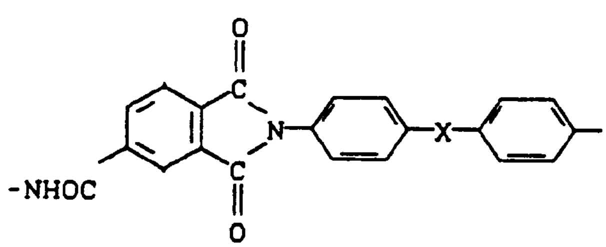 ,

X = $-CH_2-$, -O-.

Ferner sind Aramide geeignet, die Heterocyclenstrukturen in der Hauptkette enthalten, wie Oxidazol-, Triazol- Bithiazol-, Benzimidazol-, Hydantoin- und Chinazolon-Strukturen (siehe Ullmanns Encyklopädie der Technischen Chemie, 4.

Auflage, Band 11, Seiten 345 bis 350) und gegebenenfalls über Dicarbonsäuren, Diamine oder Aminocarbonsäuren aufgebaut wurden.

Auch sind solche aromatische Polyamide geeignet, die zu über 50 Gesamtgewichtsprozent aus vorgenannten aromatischen Polyamiden bestehen und deren Rest (cyclo)-aliphatische Carbonsäuren und/oder (cyclo)aliphatische Diamine sind. Als aliphatische Dicarbonsäuren können beispielsweise eingesetzt werden:

Adipinsäure, 2,2,4- und 2,4,4-Trimethyladipinsäure, Azelainsäure, Sebazinsäure, Decandicarbonsäure

und Dodecandicarbonsäure.

Als aliphatische Diamine können beispielsweise eingesetzt werden:

Hexamethylendiamin, 2,2,4- und 2,4,4-Trimethylhexamethylendiamin, Diamino-dicyclohexylmethan-Isomere, Diamino-dicyclohexylpropan-Isomere, Isophorondiamine und die Xylylendiamine.

C) Zinkborate (Hydrate)

Zinkborate (Hydrate) können Produkte unterschiedlicher Zusammensetzung sein (siehe Ullmann's Encyclopedia of Industrial Chemistry, 5. Edition, Volume A4, Page 276). Als Flammschutzmittel für Polyamidformmassen ist besonders $2ZnO*3B_2O_3*3.5H_2O$ wegen seiner Stabilität bis in Temperaturbereiche von 290-300°C geeignet.

D. Verstärkungsmittel

Erfindungsgemäß gegebenenfalls einsetzbare anorganische Verstärkungsmittel umfassen alle bekannten für die Verstärkung von Polyamiden bekannten Mittel. Zum Beispiel werden genannt: Glasfasern, Glaskugeln und/oder mineralische Füllstoffe, wie in Katz und Milewski, "Handbook of Fillers and Reinforcements for Plastics", Nostrand-Verlag, 1978, beschrieben. Bevorzugt werden als anorganische Verstärkungsmittel Glasfasern eingesetzt. Die eingesetzten Glasfasern besitzen im allgemeinen einen Durchmesser von etwa 6 bis 15 µm, bevorzugt 8 bis 13 µm, und ein Längen- zu Dicken-Verhältnis von größer als 45, bevorzugt 50 bis 200.

Als weitere Füll- und Verstärkungsstoffe kommen Mikroglaskugeln, Kohlefasern, Kreide, Quarz wie beispielsweise Novaculit und Silikate wie Asbest, Feldspat, Glimmer, Talkum, Wollastonit sowie Kaolin in kalzinierter und nicht kalzinierter Form sowie als weitere Füllstoffe und Pigmente Erdalkalimetallcarbonate, Erdalkalimetalloxide, Titandioxid und/oder Zinksulfid in Frage. Die eingesetzen mineralischen Füllstoffe besitzen mittlere Teilchendurchmesser von weniger als 20 µm, bevorzugt weniger als 10 µm, insbesondere 2 bis 8 µm. Sie können in geeigneter Weise oberflächenmodifiziert sein, z.B. mit Aminoalkylsilan behandelt sein.

E) Weitere Flammschutzmittel

Für die Flammschutzmittelkombinationen geeignete organische Halogenverbindungen sind generell bekannt, beispielsweise halogenierte Diels-Alder-Addukte, z.B. Hexachlorcyclopentadien, Hexachlorendomethylentetrahydrophthalsäure und deren Anhydrid, Bis-(hexachlorocyclopentadien)-cyclooctan (Dechlorane Plus der Occidental Chemical Corp., USA), sowie Tetrachlorphthalsäureanhydrid. Weiter kommen beispielsweise als bromhaltige Flammschutzmittel in Frage: Hexabrombenzol, Pentabromtoluol, Octa-und Decabromdiphenyl, Octa- und Decabromdiphenylether, Hexabrom-bis-phenoxyethan, Ethylen-bis-tetrabromphthalimid und deren Gemische, sowie bromierte Polystyrole (Pyro-Check-Typen der Ferro Corp., USA) und bromiertes Polyphenylenoxid (Great Lakes PO- 64 P der Great Lakes Chem. Corp., USA).

Für die Flammschutzmittelkombinationen eignen sich besonders organische Phosphorverbindungen wie Phosphate und Phosphonate. Bevorzugt sind aromatische Phosphate, z.B. Triphenylphosphat und Dikresylphenylphosphat, außerdem Phosphonate wie Diphenylmethylphosphonat, Dikresylphenylphosphonat sowie Phosphorsäure- und Phosphonsäureester von Novolaken. Außerdem kann roter Phosphor (vorzugsweise in üblicher Weise stabilisiert), rein oder in gekapselter Form, als Flammschutzmittel in der Kombination Verwendung finden.

Als organische Stickstoffverbindungen sind für die Flammschutzmittelkombinationen beispielsweise Melamin, Cyanursäure und Salze dieser Komponenten wie Melamincyanurat, -borat und/oder -phosphat geeignet.

Als weitere Flammschutzmittel können Metalloxide, z.B. Antimon(III)-oxid, Blei(VI)-oxid, Cer(IV)-oxid, Kupfer(II)-oxid, Molybdän(VI)-oxid, Vanadium(V)-oxid, Wismut(III)-oxid, Wolfram(VI)-oxid, Zinn(IV)-oxid und Zirkon(IV)-oxid sowie deren Mischungen zugesetzt werden.

F) Verarbeitungshilfsmittel

Als Verarbeitungshilfsmittel (F) können den erfindungsgemäßen Formmassen Entformungsmittel, Stabilisatoren, Fließhilfsmittel und Weichmacher zugesetzt werden.

Als Entformungsmittel können Esterwachse, z.B. Montanwachs, Amidwachs wie Rhenax$^R$ und/oder Oligoethylene verwendet werden. Als Weichmacher kommen z.B. aliphatische oligomere Polyester in Frage (s. EP 29 931 und DE 2 706 128).

G) Schlagzäh-Modifikatoren

Als Schlagzähmodifikatoren sind insbesondere Kautschuke wie Butadien-Acrylnitril-Copolymerisate, Butadien-Styrol-Copolymeriste, Butadien-Isopren- bzw. Butadien-Styrol-Blockcopolymerisate, Alkylacrylatkautschuke, EP- bzw. EPDM-Kautschuksysteme sowie Siliconkautschuke geeignet. Vorzugsweise werden als Kautschukkomponente Pfropfkautschuke eingesetzt, bei denen Vinylmono- oder Copolymerisate auf einem der vorgenannten Kautschuksysteme aufgepfropft sind, wobei die Glastemperatur der Pfropfgrundlage unterhalb -10°C liegen sollte. Bevorzugt enthalten sie auch Haftgruppen zum Polyamid, z.B. Carboxylgruppen oder Anhydridgruppen. Besonders bevorzugt sind Pfropfkautschuke vom Typ MBS- bzw. MABS- bzw. EP-, EB bzw. EPDM-oder EBDM-Kautschuke, (E = Ethylen, B = Butylen, P = Propylen,), auf die in kleinen Anteilen Maleinsäureanhydrid bzw. Styrol-Maleinsäuranhydrid aufgepfropft wurden. Weitere Beispiele sind in der US 4 174 358, US 3 845 163, US 3 668 274 und US 4 174 358 aufgeführt.

Die Herstellung der Mischungen aus thermoplastischen Polyamiden, Phosphinsäureestern von Polyphenolen, Polyfluorethylenpolymerisaten und/oder Aramiden, anorganischen Verstärkungsmitteln, Füllstoffen und Pigmenten, weiteren Flammschutzmitteln sowie Verarbeitungshilfsmitteln kann in den üblichen Mischaggregaten, wie Walzen, Knetern, Ein- und Mehrwellenextrudern, erfolgen. Die Verarbeitungshilfsmittel können als Konzentrate in thermoplastischem Polyamid in Granulatform oder als Pulvermischung bei der Compoundierung der Komponenten zudosiert werden. Die Komponenten werden in bekannter Weise vermischt und bei Temperaturen von 200°C bis 330°C in üblichen Agregaten schmelzcompoundiert oder schmelzextrudiert. Die Temperatur bei der Herstellung der Mischungen und der Formkörper aus ihnen soll üblicherweise bei 260 bis 285°C liegen.

Das Herstellungsverfahren kann sowohl diskontinuierlich als auch kontinuierlich unter Bedingungen durchgeführt werden, bei denen eine Oxidation weitgehend ausgeschlossen ist, d.h. vorzugsweise unter Schutzgasatmosphäre. Als Schutzgas eignen sich z.B. Stickstoff, Kohlendioxid und/oder Argon.

Die flammfest ausgerüsteten Polyamid-Formkörper sind besonders für den Einsatz auf dem Elektro- und Automobilsektor geeignet und finden beispielsweise zur Herstellung von Gehäusen und Abdeckungen für technische Geräte wie Elektrohaushaltsgeräte und für Automobilteile Verwendung.

## Beispiele

### A. Eingesetzte Komponenten

I. Polyamid 66 mit einer relativen Viskosität von 3,0, gemessen an einer einprozentigen Lösung in m-Kresol bei 25°C, als Granulat;
II. Umsetzungsprodukt (Ester) aus 4,4'-Dihydroxydiphenylmethan und 1-Chlor-1-oxo-3-methyl-phospholin (Moleverhältnis 1:2);
III. Methylethylphosphinsäureester eines Novolaks aus p-Kresol und Formaldehyd, OH-Zahl 468, Zahl der Phenolkerne etwa 5;
IV. Umsetzungsprodukt (Ester) aus Novolak nach III. und 1-Chlor-1-oxo-phospholin;
V. Umsetzungsprodukt (Ester) aus Novolak nach III. und 1-Chlor-1-oxo-3-methylphospholin;
VI. Umsetzungsprodukt (Ester) aus Novolak nach III. und Triphenylphosphat, Schmelzbeginn 75°C (Kofler-Heizbank);
VII. Polytetrafluorethylen-Pulver, Hostaflon TF 2027 der Firma Hoechst AG;
VIII. Aramidfaser, Kevalar 29 der Firma DuPont de Nemours, USA;
IX. Zinkborat (Hydrat), $2ZnO*3B_2O_3*5H_2O$, Firebrake ZB der U.S.Borax & Chemical Corp., USA;
X. Kurzglasfaser, Typ CS 7919 der Bayer AG;
XI. Bis-(hexachlorocyclopentadien)-cyclooctan, Dechlorane Plus 25 der Occidental Chemical Corp., USA;
XII. Melamincyanurat.

### B. Herstellung der verwendeten Phosphinsäureester-Additive

1) Phosphinsäureester aus 1-Chlor-1-oxo-3-methyl-phospholin und Bisphenol F (4,4'-Dihydroxydiphenylmethan)

200,2 g (1 Mol) Bisphenol F werden in einem 1-l-Kolben mit Heizbad, Rührer, Gaseinleitungsrohr für Stickstoff, Tropftrichter und Rückflußkühler unter Stickstoff auf 170 bis 180°C erhitzt. Dann werden in 2 Stunden 301,1 g (2 Mol) 1-Chlor-1-oxo-3-methyl-phospholin zugetropft. Nach 18 Stunden ist die Chlorwasserstoffentwicklung abgeschlossen.

Nach Abkühlen wird der noch warme Ester in 1 l Methylenchlorid aufgenommen und mit Wasser chloridfrei gewaschen. Nach Trocknen der Methylenchloridlösung wird das Natriumsulfat abfiltriert und die Lösung eingeengt. Die Ausbeute beträgt 379,1 g = 88,5 % der Theorie. Das Produkt ist harzig. Der Phosphorgehalt liegt bei 13,8 % (theoretisch 14,5 %), die OH-Zahl bei < 10.

2) Phosphinsäureester aus Methylethylphosphinsäurechlorid und einem Novolak aus p-Kresol

239,7 g (2 Gramm äquiv.) eines Novolaks aus p-Kresol und Formaldehyd (OH-Zahl 468, Kernzahl ca. 5) und 5.7 g (0,06 Mol) Magnesiumchlorid werden in einem 2-l-Kolben mit Heizbad, Rührer, Gaseinleitungsrohr für Stickstoff, Tropftrichter und Rückflußkühler unter Stickstoff auf 190 bis 200°C erhitzt. Dann werden in 1 Stunde 253,1 g (2 Mol) Methylethylphosphinsäurechlorid zugetropft. Nach 72 Stunden ist die Chlorwasserstoffentwicklung abgeschlossen.

Nach Abkühlen wird der noch warme Ester in 2 l Methylenchlorid aufgenommen und mit Wasser chloridfrei gewaschen. Nach Trocknen der Methylenchloridlösung wird das Natriumsulfat abfiltriert und die Lösung eingeengt. Die Ausbeute beträgt 402,4 g = 95,8 % der Theorie. Der Erweichungsbeginn liegt bei 98°C auf der Kofler-Heizbank, der Phosphorgehalt bei 13,4 % (theoretisch 14,7 %) und die OH-Zahl bei 0.

3) Phosphinsäureester aus 1-Chlor-1-oxo-phospholin und einem Novolak aus p-Kresol

240,3 g (2 Gramm äquiv.) eines Novolaks aus p-Kresol und Formaldehyd (OH-Zahl 469, Kernzahl ca. 5) und 273,1 g (2 Mol) 1-Chlor-1-oxo-phospholin werden wie unter 2 zur Umsetzung gebracht. Die Aufarbeitung erfolgt ebenfalls wie unter 2.

Die Ausbeute beträgt 423,2 g = 96,1 % der Theorie. Der Erweichungsbeginn liegt bei 134°C der Phosphorgehalt bei 13,1 % (theoretisch 14,1 %) und die OH-Zahl bei 0.

4) Phosphinsäureester aus 1-Chlor-1-oxo-3-methyl-phospholin und einem Novolak aus p-Kresol

240,3 g (2 Gramm äquiv.) eines Novolaks aus p-Kresol und Formaldehyd (OH-Zahl 468, Kernzahl ca. 5) und 301,1 g (2 Mol) 1-Chlor-1-oxo-3-methyl-phospholin werden wie unter 2 zur Umsetzung gebracht. Die Aufarbeitung erfolgt ebenfalls wie unter 2.

Die Ausbeute beträgt 437,1 g = 93,3 % der Theorie. Der Erweichungsbeginn liegt bei 136°C, der Phosphorgehalt bei 12,6 % (theoretisch 13,2) und die OH-Zahl bei 0.

5) Phosphorsäureester aus Triphenylphosphat und einem Novolak aus p-Kresol

359,6 g (3 Gramm äquiv.) eines Novolaks aus p-Kresol und Formaldehyd (OH-Zahl 468, Kernzahl ca. 5), 652,6 g (2 Mol) Triphenylphosphat und 8,6 g Magnesiumchlorid (0,09 Mol) werden in einem 2-l-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200°C erhitzt. Der über die Kapillare eingeleitete Stickstoffstrom sorgt für gute Durchmischung. Anschließend werden in 1,5 Stunden bei fallendem Vakuum von 20 bis 3 mbar und Temperaturen von 200 bis 210°C über Kolonne und Kühler 282,3 g (3 Mol) Phenol abdestilliert. Anschließend wird 1 Stunde bei 250°C und einem Vakuum von 3 mbar ausgeheizt.

Nach Abkühlen wird das Reaktionsprodukt in 2 l Methylenchlorid aufgenommen und mit Wasser chloridfrei gewaschen. Nach Trocknen der Methylenchlorid-Lösung wird das Natriumsulfat abfiltriert und die Lösung eingeengt. Die Ausbeute beträgt 694,9 g = 95,2 % der Theorie. Der Erweichungsbeginn liegt bei 75°C auf der Kofler-Heizbank, der Phosphorgehalt bei 8,4 % (theoretisch 8,5 %) und die OH-Zahl bei 0.

C. Herstellung, Verarbeitung und Prüfung der Formmassen

Die eingesetzten Komponenten werden in den in Tabelle 1 angegebenen Mengen (Angaben in Gew.-%) in einem Zweiwellenextruder geschmolzen, vermischt, zu Strängen extrudiert und granuliert. Die Herstellung der Formmassen kann beispielsweise mit einem Extruder, ZSK 32 der Firma Werner & Pfleiderer, bei Massetemperaturen von 275 bis 285°C und bei einer Schneckendrehzahl von 130 U/min. sowie einem Durchsatz von 8 kg/h erfolgen.

Nach ausreichender Trocknung (z.B. bis 4 Stunden bei 120°C) werden die Formmassen auf üblichen Spritzgußmaschinen bei Massetemperaturen von 260°C, einer Formtemperatur von 80°C und einer Schmelzestandzeit von nicht länger als 9 Minuten zu Formkörpern bzw. Normprüfstäben verspritzt und folgenden Tests unterzogen:

- Bestimmung des Phosphorgehalts (Elementaranalyse, % P),
- Brandtest nach Vorschrift Underwriter Laboratories (UL 94)

Tabelle 2 zeigt die erhaltenen Prüfdaten.

**Tabelle 1:** Zusammensetzung der Polyamidformmassen in Gew.-%

| Komponenten | | I. (Polyamid 66) | II. | III. (Phosphorverbindungen) | IV. | V. | VI. | VII. (Antidipping-) mittel B) | VIII. | IX: Zinkborat | X. (Glasfaser D) | XI. (sonstige FR-Mittel E) | XII. |
|---|---|---|---|---|---|---|---|---|---|---|---|---|---|
| Vergleichsbeispiele | 1 | 71,0 | | | | | | | 1,0 | 8,0 | 20,0 | | |
| | 2 | 57,0 | | 15,0 | | | | | | 8,0 | 20,0 | | |
| | 3 | 64,0 | | 15,0 | | | | 0,5 | | | 20,0 | | |
| | 4 | 64,0 | | 15,0 | | | | | 1,0 | | 20,0 | | |
| Beispiele (erfindungsgemäß) | 1 | 56,0 | 15,0 | | | | | | 1,0 | 8,0 | 20,0 | | |
| | 2 | 56,0 | | 15,0 | | | | | 1,0 | 8,0 | 20,0 | | |
| | 3 | 56,5 | | | 15,0 | | | 0,5 | | 8,0 | 20,0 | | |
| | 4 | 56,0 | | | 15,0 | | | | 1,0 | 8,0 | 20,0 | | |
| | 5 | 53,0 | | | | 18,0 | | | 1,0 | 8,0 | 20,0 | | |
| | 6 | 53,0 | | | 9,0 | | 9,0 | | 1,0 | 8,0 | 20,0 | | |
| | 7 | 55,0 | | | 10,0 | | | | 1,0 | 8,0 | 20,0 | 6,0 | |
| | 8 | 53,5 | | | 7,5 | | 5,0 | | 1,0 | 8,0 | 20,0 | | 5,0 |

Tabelle 2: Prüfdaten

| | | Gew.-% Phosphor | Tropfverhalten | Brandverhalten UL94/1,6 mm |
|---|---|---|---|---|
| Vergleichsbeispiele | 1 | - | tropft brennend | n.b. |
| | 2 | 2,0 | tropft brennend | V-2 |
| | 3 | 2,0 | tropft brennend | n.b. |
| | 4 | 2,0 | tropft brennend | n.b. |
| Beispiele (erfindungsgemäß) | 1 | 2,1 | tropft nicht | V-1 |
| | 2 | 2,0 | tropft nicht | V-0 |
| | 3 | 2,0 | tropft nicht | V-0 |
| | 4 | 2,0 | tropft nicht | V-0 |
| | 5 | 2,3 | tropft nicht | V-0 |
| | 6 | 1,9 | tropft nicht | V-0 |
| | 7 | 1,3 | tropft nicht | V-0 |
| | 8 | 1,4 | tropft nicht | V-0 |

(n.b. = nicht bestimmt)

Aus den Beispielen 1 bis 8 der Tabellen 1 und 2 geht hervor, daß die erfindungsgemäße Mischung an Phosphinsäureestern von Polyphenolen, Antidrippingmitteln und Zinkborat deren Polyamidmischungen einen Flammschutz gibt, der der Beurteilung V-0 nach UL94 nicht tropfend bei 1,6 mm dicken Prüfkörpern zukommt. Die Mitverwendung von weiteren Phosphorverbindungen, von Halogen- und/oder Stickstoffverbindungen erlaubt eine Verringerung der für V-0/1,6 mm benötigten Menge an erfindungsgemäßen Phosphinsäureestern.

## Patentansprüche

1. Thermoplastische, flammgeschützte, nicht tropfende Polyamidformmassen, bei denen die eingesetzten Polyamide amorphe und/oder teilkristalline, überwiegend aliphatische/cylcloaliphatische Palyamide sind, enthaltend auf 100 Gew.-Teile dieser Polyamidformmassen

   A) 3 bis 20 Gew.-% Phosphinsäureester von Polyphenolen der Formel(I)

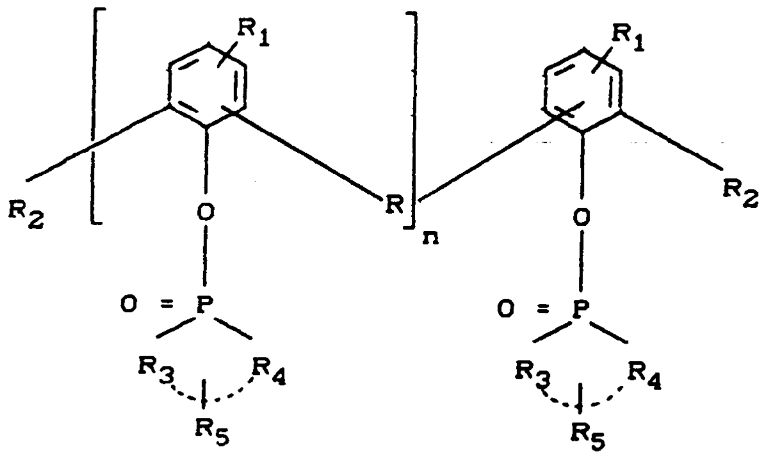

(I),

worin

n eine ganze Zahl zwischen 1 und 20, bevorzugt zwischen 1 und 10,

R eine Alkylengruppe mit 1 bis 4 Kohlenstoffatomen, eine Cycloalkylengruppe mit 5 bis 9 Kohlenstoffatomen oder, wenn n = 1 ist, auch eine direkte Bindung, eine Sulfonyl- oder Carbonylgruppe bzw.- Sauerstoff oder Schwefel,

$R_1$ und $R_2$ Wasserstoff, Halogen, Alkylgruppen mit 1 bis 12 Kohlenstoffatomen, Cycloalkyl-mit 5 bis 9 Kohlenstoffatomen, Arylgruppen mit 6 bis 10 Kohlenstoffatomen,

$R_3$ und $R_4$ Alkylgruppen mit 1 bis 4 Kohlenstoffatomen und/oder Arylgruppen mit 6 bis 10 Kohlenstoffatomen sind, wobei $R_3$ und $R_4$ im Fall von Alkylgruppen auch durch eine Einfach- oder Doppelbindung verbunden sein können und der über das Phosphoratom gebildete Ring Alkylgruppen $R_5$ mit 1 bis 4 Kohlenstoffatomen tragen kann,

B) Antidripping-Mittel in einer Gesamtmenge nicht über 6 Gew.-%, aus der Reihe von

B1) 0,1 bis 3 Gew.-%, vorzugsweise 0,3 bis 1,0 Gew.-%, eines Polyfluorethylenpolymerisats und/oder

B2) 0,1 bis 5 Gew.-%, vorzugsweise 1 bis 2,5 Gew.-%, eines Aramids,

C) 0,5 bis 15 Gew.-%, vorzugsweise 3 bis 12 Gew.-%, Zinkborat (Hydrate) als Flammschutz-Verstärker;

sowie gegebenenfalls weitere Zusatzstoffe aus der Reihe

D) 0 bis 40 Gew.-%, vorzugsweise 15 bis 30 Gew.-% anorganische Füllstoffe und/oder Verstärkungsmittel und/oder Pigmente,

E) 0 bis 30 Gew.-%, vorzugsweise 5 bis 20 Gew.-%, weitere Flammschutzmittel wie Stickstoff-, Halogen- und/oder andere Phosphorverbindungen,

F) 0 bis 10 Gew.-%, vorzugsweise 1 bis 5 Gew.-%, Verarbeitungshilfsmittel und

G) 0 bis 20 Gew.-% übliche Zusatzmittel für Polyamide wie UV-, Licht- und Thermostabilisatoren, bekannte Schlagzähigkeitsverbesserer/Verträglichkeitsverbesserer und/oder Blendpolymere.

**2.** Formmassen gemäß Anspruch 1, dadurch gekennzeichnet, daß sie als Phosphinsäureester solche der Formeln II und/oder III enthalten

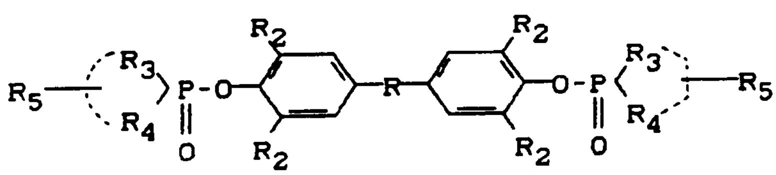

(II)

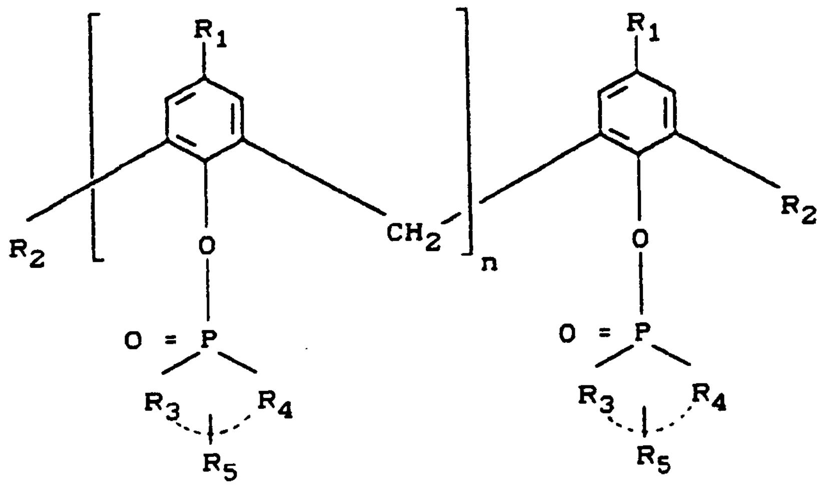

(III),

wobei

n eine ganze Zahl zwischen 2 und 15, bevorzugt zwischen 2 und 10,

R eine einfache Bindung, Methylen, Isopropyliden, Sauerstoff, Schwefel, eine Sulfonyl- oder Carbonylgruppe,

$R_1$ Wasserstoff, Halogen oder eine Alkylgruppe mit 1 bis 12 Kohlenstoffatomen,

$R_2$ Wasserstoff, Halogen oder eine Alkylgruppe mit 1 bis 4 Kohlenstoffatomen,

$R_3$ und $R_4$ Methyl-, Ethyl-, Phenylgruppen oder gemeinsam die Butyliden- bzw. Alkylbutylidengruppe darstellen.

3. Formmassen gemäß Ansprüchen 1 und 2, dadurch gekennzeichnet, daß sie als Phosphinsäureester solche der Formel (IV) und (V) enthalten

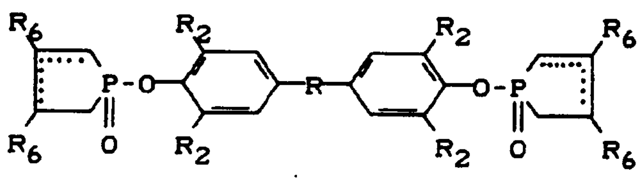

(IV),

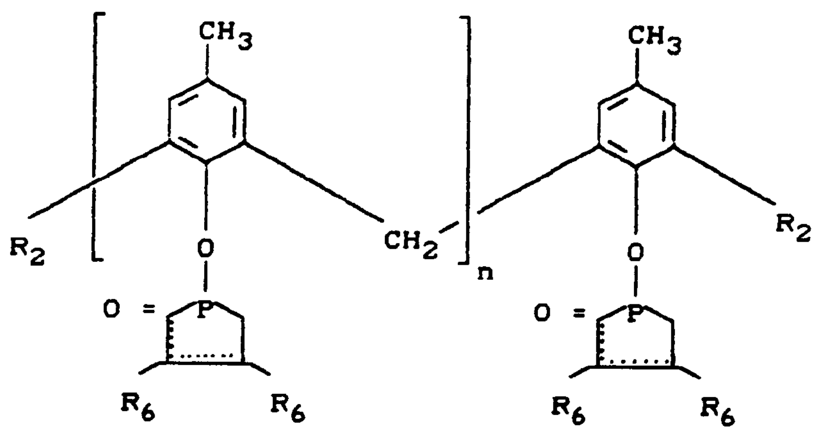

(V),

worin

n eine ganze Zahl zwischen 2 und 8 ist,

R die oben beschriebene Bedeutung hat,

$R_2$ Wasserstoff- oder Methylgruppen und

$R_6$ ebenfalls Wasserstoff oder Methylgruppen darstellen.

4. Formmassen gemäß Ansprüchen 1 bis 3, dadurch gekennzeichnet, daß als Polyamid Polyamid 6 oder Polyamid 66 eingesetzt wird.

5. Formmassen gemäß Ansprüchen 1 bis 4, dadurch gekennzeichnet, daß die Komponente A) in Mengen von 5 bis 15 Gew.-% vorliegt.

6. Formmassen gemäß Ansprüchen 1 bis 5, dadurch gekennzeichnet, daß die Komponente B) in Mengen von 0,3 bis 2,5 Gew.-% vorliegt.

7. Formmassen gemäß Ansprüchen 1 bis 6, dadurch gekennzeichnet, daß die Komponente C) in Mengen von 3-12 Gew.-% vorliegt.

8. Formmassen gemäß Ansprüchen 1 bis 7, dadurch gekennzeichnet, daß sie zusätzlich Pigmente, anorganische Füllstoffe, Verstärkungsmittel wie Glasfasern, Stabilisatoren, Fließmittel, Entformungsmittel, Antistatika und/oder andere Flammschutzmittel sowie Schlagzähmodifikatoren enthalten.

9. Formmassen gemäß Ansprüchen 1 bis 8, dadurch gekennzeichnet, daß als andere Flammschutzmittel Phosphorsäureester von Novolaken, Melaminverbindungen und geeignete chlorhaltige aliphatische Verbindungen als Flammschutzmittel eingesetzt werden.

10. Verfahren zur Herstellung der Polyamidformmassen der Zusammensetzung nach Ansprüchen 1 bis 9, dadurch gekennzeichnet, daß man die Komponenten A), B) und C), sowie gegebenenfalls D), E), F), und G), in bekannter Weise vermischt und bei Temperaturen von 200°C bis 330°C in üblichen Aggregaten schmelzcompoundiert oder schmelzextrudiert.

## Claims

1. Thermoplastic, flameproofed, non-dripping polyamide moulding compounds in which the polyamides used are amorphous and/or partially crystalline, predominantly aliphatic/cycloaliphatic polyamides, containing, to 100 parts by weight of these polyamide moulding compounds,
A) from 3 to 20% by weight of phosphinic acid esters of polyphenols corresponding to formula (I)

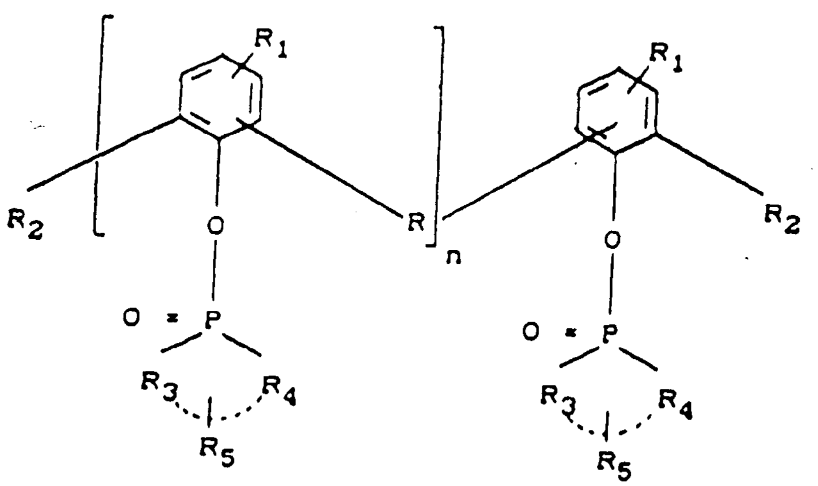

(I),

wherein

n stands for an integer of from 1 to 20, preferably from 1 to 10,

R denotes an alkylene group having 1 to 4 carbon atoms, a cycloalkylene group having 5 to 9 carbon atoms or, when n = 1, also a direct bond, a sulphonyl or carbonyl group or oxygen or sulphur,

$R_1$ and $R_2$ denote hydrogen, halogen, alkyl groups having 1 to 12 carbon atoms, cycloalkyl groups having 5 to 9 carbon atoms, aryl groups having 6 to 10 carbon atoms,

$R_3$ and $R_4$ denote alkyl groups having 1 to 4 carbon atoms and/or aryl groups having 6 to 10 carbon atoms, and $R_3$ and $R_4$ may be joined by a single or double bond in the case of

alkyl groups, and the ring formed via the phosphorus atom may carry alkyl groups $R_5$ having 1 to 4 carbon atoms,

B) anti-dripping agent in a total quantity not above 6% by weight, selected from

B1) 0.1 to 3% by weight, preferably from 0.3 to 1.0% by weight, of a polyfluoroethylene polymer and/or

B2) 0.1 to 5% by weight, preferably from 1 to 2.5% by weight, of an aramide,

C) 0.5 to 15% by weight, preferably from 3 to 12% by weight, of zinc borate (hydrates) as flameproofing reinforcing agent;

and optionally other additives selected from

D) 0 to 40% by weight, preferably from 15 to 30% by weight, of inorganic fillers and/or reinforcing agents and/or pigments,

E) 0 to 30% by weight, preferably from 5 to 20% by weight, of other flameproofing agents, such as nitrogen compounds, halogen compounds and/or other phosphorus compounds,

F) 0 to 10% by weight, preferably from 1 to 5% by weight, of processing auxiliaries and

G) 0 to 20% by weight of conventional additives for polyamides such as UV, light and thermostabilizers, known impact strength improvers/ompatibility improvers and/or blend polymers.

**2.** Moulding compounds according to Claim 1, characterised in that the phosphinic acid esters contained in them are those corresponding to formulae II and/or III

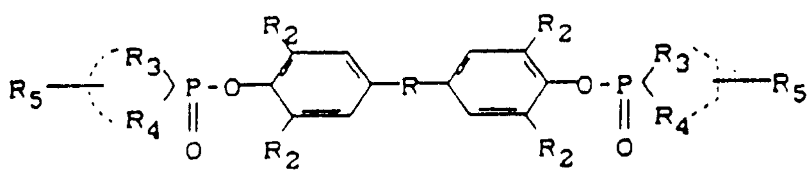

(II)

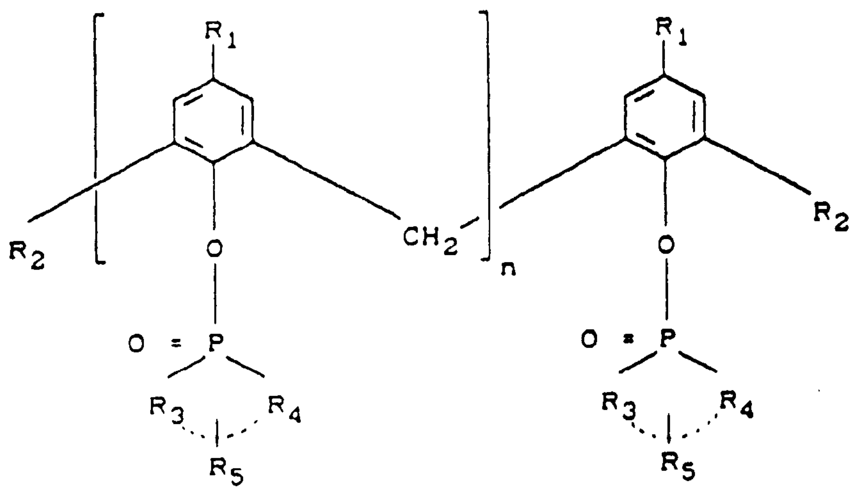

(III),

wherein

| | |
|---|---|
| n | stands for an integer of from 2 to 15, preferably from 2 to 10, |
| R | denotes a single bond, methylene, isopropylidene, oxygen, sulphur, a sulphonyl group or a carbonyl group, |
| $R_1$ | stands for hydrogen, halogen or an alkyl group having 1 to 12 carbon atoms, |
| $R_2$ | denotes hydrogen, halogen or an alkyl group having 1 to 4 carbon atoms, and |
| $R_3$ and $R_4$ | denote methyl, ethyl or phenyl groups or together represent the butylidene or alkylbutylidene groups. |

**3.** Moulding compounds according to Claims 1 and 2, characterised in that the phosphinic acid esters contained in them are those corresponding to formulae (IV) and (V)

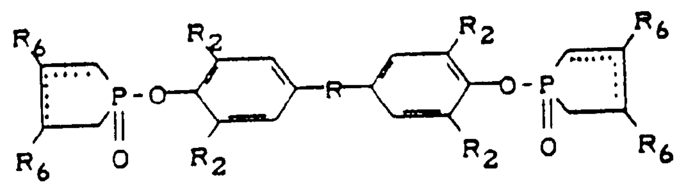

(IV),

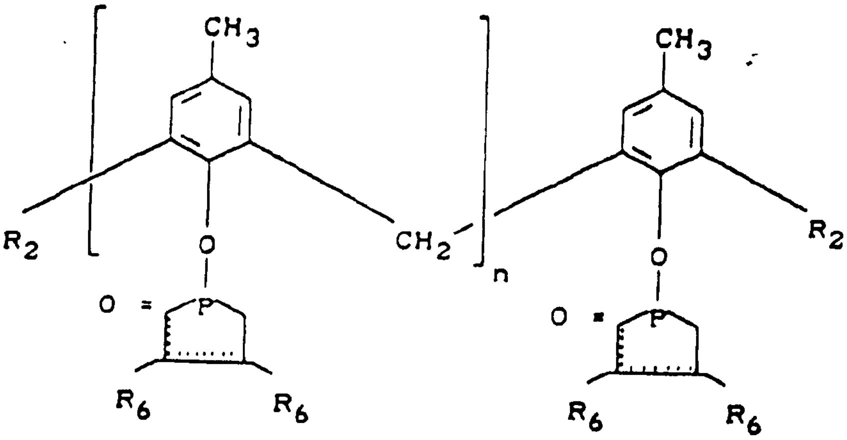

(V),

wherein

n stands for an integer of from 2 to 8,

R has the meaning described above,

$R_2$ denotes hydrogen or methyl groups and

$R_6$ also stands for hydrogen or methyl groups.

**4.** Moulding compounds according to Claims 1 to 3, characterised in that the polyamide used is Polyamide 6 or Polyamide 66.

**5.** Moulding compounds according to Claims 1 to 4, characterised in that component A) is prsent in quantities of from 5 to 15% by weight.

**6.** Moulding compounds according to Claims 1 to 5, characterised in that component B) is present in quantities of from 0.3 to 2.5% by weight.

**7.** Moulding compounds according to Claims 1 to 6, characterised in that component C) is present in quantities of from 3-12% by weight.

**8.** Moulding compounds according to Claims 1 to 7, characterised in that they contain, in addition, pigments, inorganic fillers, reinforcing agents such as glass fibres, stabilizers, flow improvers, mould release agents, antistatic agents and/or other flameproofing agents and impact strength modifiers.

**9.** Moulding compounds according to Claims 1 to 8, characterised in that the other flameproofing agents used are phosphoric acid esters of Novolaks, melamine compounds and suitable chlorine-containing aliphatic compounds.

**10.** A process for the preparation of the polyamide moulding compounds having the composition according to Claims 1 to 9, characterised in that components A), B) and C) and optionally D), E), F) and G) are mixed in known manner and melt compounded or melt extruded in conventional apparatus at temperatures of from 200°C to 330°C.

## Revendications

1. Compositions thermoplastiques de polyamides à mouler, ignifuges et non gouttantes, dans lesquelles les polyamides utilisés sont des polyamides amorphes et/ou partiellement cristallins, principalement aliphatiques et cycloaliphatiques, contenant, pour 100 parties en poids de ces compositions à mouler de polyamides,
   A) 3 à 20 % en poids d'esters d'acide phosphinique de polyphénols de formeule (I)

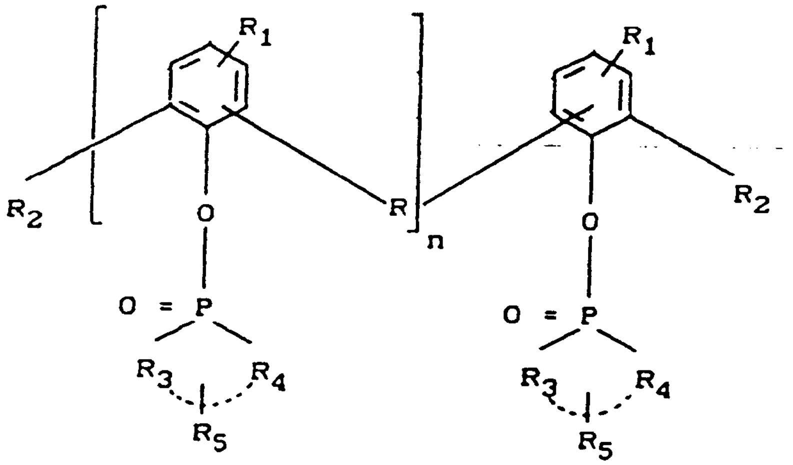

(I),

dans laquelle

- n est un nombre entier de 1 à 20, de préférence de 1 à 10,
- R est un groupe alkylène ayant 1 à 4 atomes de carbone, un groupe cycloalkylène ayant 5 à 9 atomes de carbone ou bien, lorsque n est égal à 1, R représente aussi une liaison directe, un groupe sulfonyle ou carbonyle ou bien de l'oxygène ou du soufre,
- $R_1$ et $R_2$ représentent de l'hydrogène, un halogène, des groupes alkyle ayant 1 à 12 atomes de carbone, cycloalkyle ayant 5 à 9 atomes de carbone, des groupes aryle ayant 6 à 10 atomes de carbone,
- $R_3$ et $R_4$ sont des groupes alkyle ayant 1 à 4 atomes de carbone et/ou des groupes aryle ayant 6 à 10 atomes de carbone, $R_3$ et $R_4$, dans le cas de groupes alkyle, pouvant aussi être liés par une liaison simple ou double et le noyau formé par l'intermédiaire de l'atome de phosphore pouvant porter des groupes alkyle $R_5$ ayant 1 à 4 atomes de carbone,

   B) Des agents empêchant la formation de gouttes en une quantité totale ne dépassant pas 6 % en poids, de la série de
      B1) 0,1 à 3 % en poids, de préférence 0,3 à 1,0 % en poids, d'un polymère polyfluoréthylénique et/ou
      B2) de 0,1 à 5 % en poids, de préférence 1 à 2,5 % en poids, d'un aramide,
   C) 0,5 à 15 % en poids, de préférence 3 à 12 % en poids de borate de zinc (hydrates) comme agent renforçant la résistance à la flamme ;

   ainsi que le cas échéant d'autres additifs choisis dans la série de :
   D) 0 à 40 % en poids, de préférence 15 à 30 % en poids, de charges inorganiques et/ou d'agents de renforcement et/ou de pigments,
   E) 0 à 30 % en poids, de préférence 5 à 20 % en poids, d'autres retardateurs de flamme tels que des composés azotés, halogénés et/ou d'autres composés phosphorés,
   F) de 0 à 10 % en poids, de préférence 1 à 5 % en poids d'agents auxiliaires de mise en oeuvre et
   G) de 0 à 20 % en poids d'additifs classiques pour polyamides tels des agents UV-stabilisants, photostabilisants et thermostabilisants, des substances connues d'amélioration de la résistance au choc/compatibilité et/ou des polymères de protection.

2. Compositions à mouler suivant la revendication 1, caractérisées en ce qu'elles contiennent comme esters d'acide phosphinique des esters de formules II et/ou III

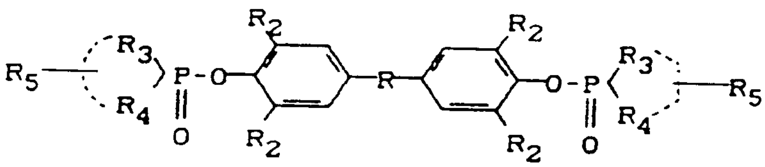

(II)

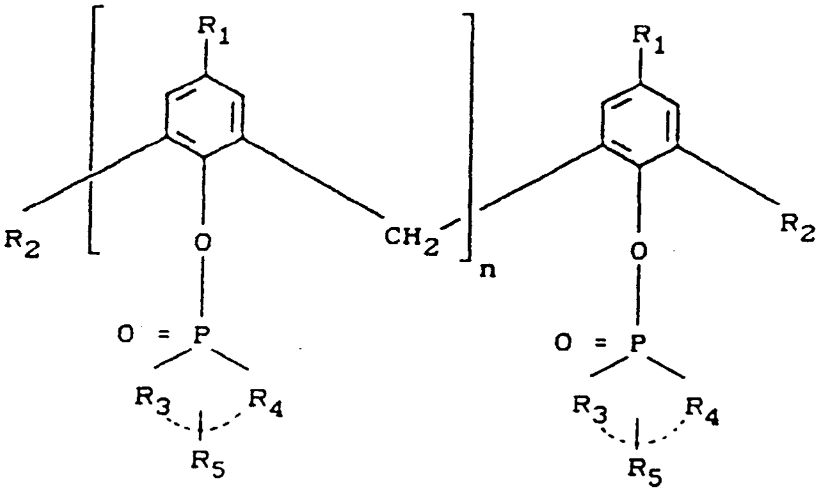

(III),

dans lesquelles

| | |
|---|---|
| n | est un nombre entier de 2 à 15, de préférence de 2 à 10, |
| R | est une liaison simple, un groupe méthylène, isopropylidène, de l'oxygène, du soufre, un groupe sulfonyle ou un groupe carbonyle, |
| $R_1$ | représente l'hydrogène, un halogène ou un groupe alkyle ayant 1 à 12 atomes de carbone, |
| $R_2$ | représente l'hydrogène, un halogène ou un groupe alkyle ayant 1 à 4 atomes de carbone, |
| $R_3$ et $R_4$ | représentent des groupes méthyle, éthyle, phényle ou forment ensemble le groupe butylidène ou un groupe alkylbutylidène. |

3. Compositions à mouler suivant les revendications 1 et 2, caractérisées en ce qu'elles contiennent comme esters d'acide phosphinique des esters de formules (IV) et (V)

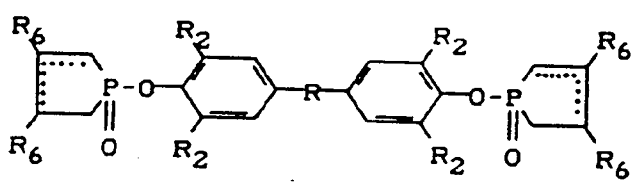

(IV),

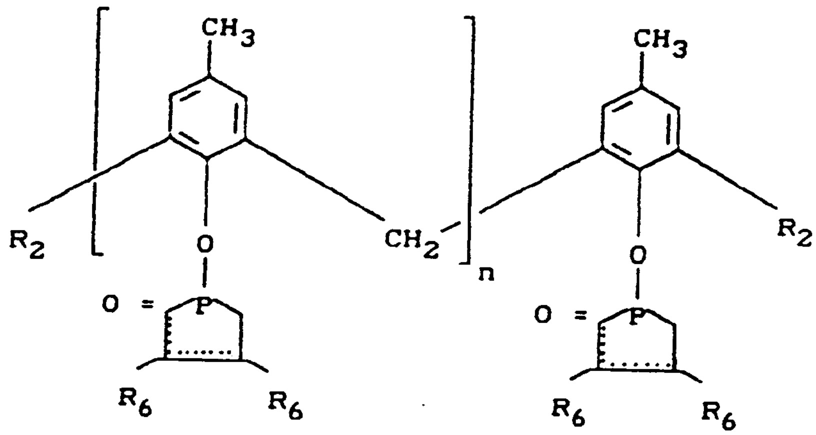

(V),

dans lesquelles

n est un nombre entier de 2 à 8,

R a la définition indiquée ci-dessus,

$R_2$ représente de l'hydrogène ou des groupes méthyle,

$R_6$ représente également l'hydrogène ou des groupes méthyle.

4. Compositions à mouler suivant les revendications 1 à 3, caractérisées en ce qu'on utilise comme polyamide du Polyamide 6 ou du Polyamide 66.

5. Compositions à mouler suivant les revendications 1 à 4, caractérisées en ce que le composant A) est présent en quantités de 5 à 15 % en poids.

6. Compositions à mouler suivant les revendications 1 à 5, caractérisées en ce que le composant B) est présent en quantités de 0,3 à 2,5 % en poids.

7. Compositions à mouler suivant les revendications 1 à 6, caractérisées en ce que le composant C) est présent en quantités de 3 à 12 % en poids.

8. Compositions à mouler suivant les revendications 1 à 7, caractérisées en ce qu'elles contiennent en outre des pigments, des charges inorganiques, des agents de renforcement tels que des fibres de verre, des agents stabilisants, des agents d'écoulement, des agents de démoulage, des agents antistatiques et/ou des agents retardateurs de flamme ainsi que des modificateurs de résistance au choc.

9. Compositions à mouler suivant les revendications 1 à 8, caractérisées en ce qu'on utilise comme autres agents retardateurs de flamme des esters d'acide phosphorique de novolaques, des composés de mélamine et des composés aliphatiques chlorés appropriés comme agents retardateurs de flamme.

10. Procédé de production de compositions de polyamides à mouler contenant les composants suivant les revendications 1 à 9, caractérisé en ce que les composants A), B) et C) de même que le cas échéant les composants D), E), F) et G) sont mélangés d'une manière connue et formulés à l'état fondu ou extrudés à l'état fondu à des températures comprises entre 200 et 330°C dans des appareils classiques.